(19) Europäisches Patentamt
European Patent Office
Office européen des brevets

(11) Publication number : **0 342 679 B1**

(12) # EUROPEAN PATENT SPECIFICATION

(45) Date of publication of patent specification : **25.03.92 Bulletin 92/13**

(51) Int. Cl.$^5$ : **B60K 15/04**

(21) Application number : **89108970.8**

(22) Date of filing : **18.05.89**

(54) **In-vehicle-controlled fuel filler device.**

(30) Priority : **20.05.88 IT 5316788 U**

(43) Date of publication of application : **23.11.89 Bulletin 89/47**

(45) Publication of the grant of the patent : **25.03.92 Bulletin 92/13**

(84) Designated Contracting States : **DE ES FR GB SE**

(56) References cited :
**CH-A- 317 336**
**DD-A- 15 186**
**DE-A- 2 329 015**
**GB-A- 925 577**
**Auszüge aus den Gebrauchsmustern WILA-GMA Ausgabe A - Heft 14, 26. Jahrgang DE-U1-88 16 045**

(73) Proprietor : **FIAT AUTO S.p.A.**
**Corso Giovanni Agnelli 200**
**I-10135 Torino (IT)**

(72) Inventor : **Prato, Luigi**
**Via delle Magnolie, 7**
**I-10090 Villarbasse (IT)**
Inventor : **Filtri, Luigi**
**Via Garessio, 24/2**
**I-10100 Torino (IT)**

(74) Representative : **Boggio, Luigi et al**
**STUDIO TORTA Società Semplice Via Viotti, 9**
**I-10121 Torino (IT)**

**EP 0 342 679 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a fuel filler device controllable from inside the vehicle, and featuring a rotary lid flush with the vehicle body when closed. Italian Patent Application n.68 134-A/87, (corresponding with DE-U-88 16 045, published 23.02.1989) filed by the present Application on 29 December 1987 and entitled "Fuel filler featuring a perfected closure device, controllable from inside the vehicle", relates to a capless fuel filler fitted inside the vehicle body and closed by a ball valve controlled manually or via a motor from inside the passenger compartment via ties and/or linkages. These control a rotary pin connected in line with the valve plug, which consists of a ball with a diametrical through hole having its axis perpendicular to the pin. The portion of the ball facing outwards of the vehicle body is also provided with a flat surface designed to be flush with the vehicle body when the valve is closed.

Fillers of the aforementioned type undoubtedly present numerous advantages: no danger of losing the cap; no need for the driver to get out to remove the cap when refuelling; and no risk of fuel pilferage. For styling and streamlining reasons, however, such filler are unsuitable for touring, especially high c.c. touring, cars, which require a fuel filler box having a lid designed to fit flush with the vehicle body and cover the entire box when the filler is closed. A further drawback of fillers of the aforementioned type is that, unless provision is made for levers projecting through the vehicle body, they are controllable exclusively from inside the vehicle; whereas they could be applied to advantage, by virtue of eliminating standard caps, simplifying design, reducing production cost and imporving sealing, on all types of vehicles, even those not requiring control of the filler form inside the passenger compartment.

The aim of the present invention is to provide a vehicle fuel filler device designed to afford the same advantages, while at the same time overcoming the drawbacks of the aforementioned known type of filler, in particular which may be employed in a fuel filler box provided with flush with the vehicle body.

This aim is attained by the present invention, which relates to, a vehicle fuel filled device as defined in claim 1.

A non-limiting embodiment of the invention will be described by way of example with reference to the accompanying drawings, in which :

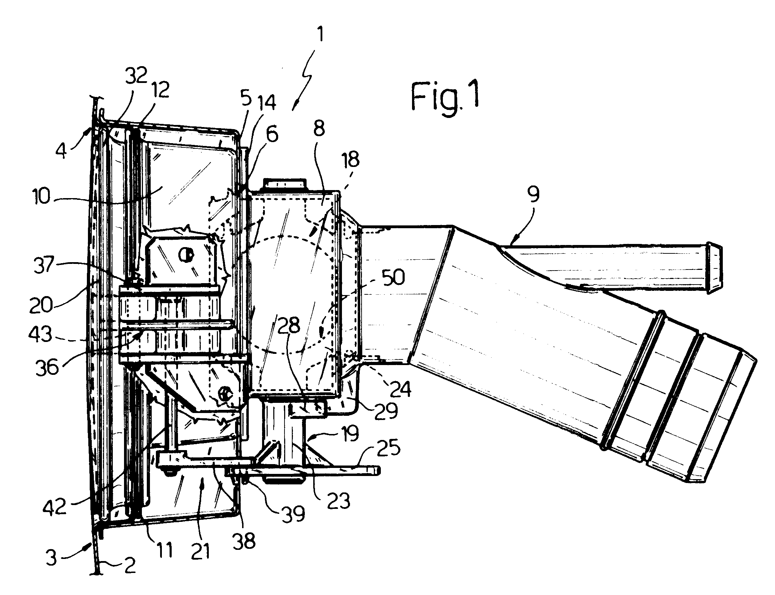

Fig.1 shows an elevation of a vehicle fuel filler device in accordance with the teachnings of the present invention;

Fig.s 2 and 3 show bottom plan views of the Fig.1 device in two different operating positions.

Number 1 in Fig.s 1 to 3 indicates a fuel filler device for any known type of vehicle. For the sake of simplicity, only a lateral portion of vehicle body 2 is shown, this being defined by an outer surface 3, and presenting a fuel filler box 4. Instead of being defined by a straightforward die-cut opening in body 2, fuel filler box 4, in the non-limiting example shown, is defined by a concave tank-shaped sheet metal element, and presents an end wall 5 having an opening 6 and gripped between the inlet end of filler 9 and a cup-shaped body 10 housed invisibly inside box 4, substanflush with said surface 3. Both filler 9 and cup-shaped body 10 are preferably molded from synthetic plastic material. Cup-shaped body 10 presents a U-shaped outer annular rim 11 cooperating with a locating tab 12 formed inside box 4. Inlet end 8 of filler 9 presents an outer radial flange 14 surrounding opening 6, and cup-shaped body 10, which is designed in such a manner as to be housed inside box 4, is secured to inlet end 8 of filler 9. Filler 9 is formed as described in aforementioned Italian Patent Application n.68 134-A/87 entitled "Fuel filler featuring a perfected lid, controllable from inside the vehicle", filed by the present Applicant on 29 December 1987, and the content of which is included herein purely by way of reference as required. Filler 9 is designed to snap on to cup-shaped body 10 by which it is secured to body 2 in known manner (not shown), e.g. as described in said Patent Application.

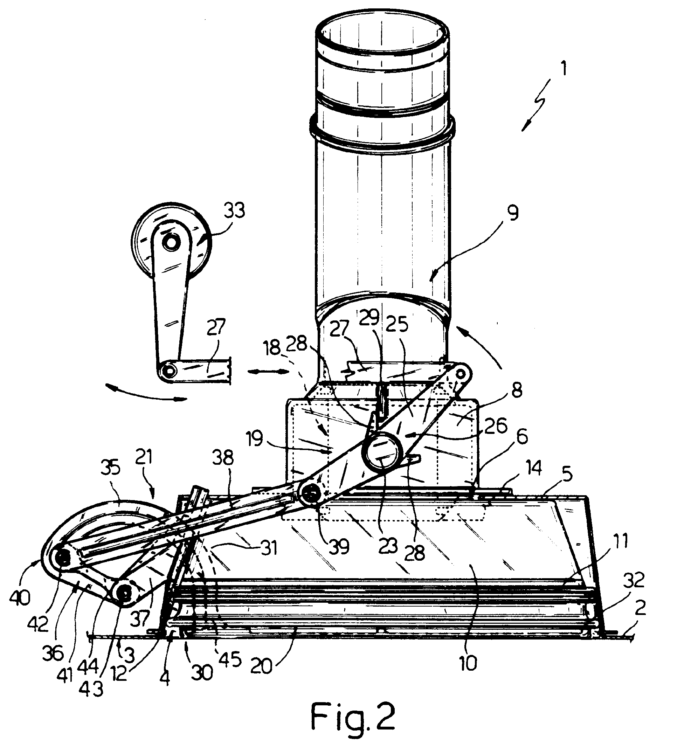

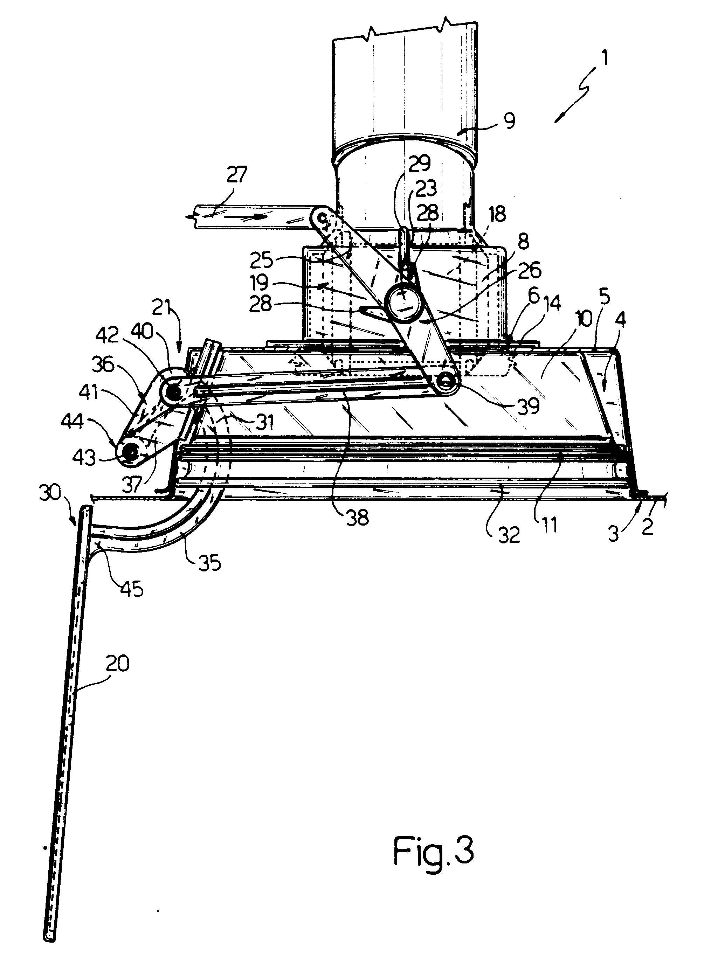

Device 1 comprises filler 9; box 4; cup-shaped body 10 (dispensable); an on-off ball valve 18 forming part of filler 9 and housed inside inlet end 8 of the same; a member 19 for control ling valve 18 and projecting externally from filler 9 beneath inlet end 8; a rotary lid 20 designed to assume a first operating position (Fig. 2) wherein it closes fuel filler box 4 substantially flush with outer surface 3 of body 2, and a second operating position (Fig. 3) wherein it projects transversely in relation to surface 3, thus opening box 4; supporting means for lid 20; and articulated drive means 21 connecting lid 20 to member 19 controlling ball valve 18, for selectively setting lid 20 in said first operating position (Fig. 2) when valve 18 is closed, and in said second operating position (Fig. 3) when valve 18 is open.

Control member 19 comprises a rotary pin 23 secured angularly integral with a known plug 24 on ball valve 18; and a rocking lever 25 having an intermediate portion 26 secured angularly integral with rotary pin 23. Lever 25 presents a first end pivoting on articulated drive means 21, and a second end, opposite the first, pivoting on a movable drive element 27 consisting, in the example shown, of a connecting rod, and controllable manually and/or via motor means 28 controlled in known manner, e.g. via a switch, by the user inside the passenger compartment of the vehicle of which body 2 forms part. Rotary pin 23 presents a pair of outer radial projections 28 designed to cooperate with a stop rib 29 projecting outwards of inlet end 8 of filler 9, parallel to and in the vicinity of pin 23.

In the non-limiting example shown, said means supporting rotary lid 20 are defined by cup-shaped body 10, which, in addition to securing inlet end 8, supports lid 20 hinged in idle and projecting manner, along end edge 30, to a corresponding end 31 of cup-shaped body 10. Cup-shaped body 10 also presents a front edge 32 with which lid 20 mates in the closed position shown in Figure 2. In more detail, lid 20 is supported in rigidly projecting manner on a curved arm 35 forming part of an elbow lever 36 with which lid 20 is molded in one piece from synthetic plastic material. Lever 36 pivots on a fixed fork-shaped bracket 37 integral with body 2 by virtue of being formed integral with cup-shaped body 10 and projecting laterally from end 31. Bracket 37 and elbow 36 form an integral part of articulated drive means 21, which also comprise a connecting rod 38 pivoting at one end on control member 19 (in the example shown, on one end of rocking lever 25 by means of pin 39) and at the opposite end on the center line of lever 36 via a rod 42 (in the example shown, elbow 40 defining the intermediate portion of lever 36). In addition to elbow 40, lever 36 also comprises curved arm 35 and a straight arm 41 connected to arm 35 via elbow 40. Elbow 36 pivots in projecting manner on fixed bracket 37 via a pin 43 on a first end 44 forming part of straight arm 41, and is secured angularly integral with lid 20 on a second end 45 forming part of curved arm 35, which extends over an arc of substantially 180° having end 44 of lever 35 as its center.

Device 1 as described above operates as follows. When control member 19 common to both valve 18 and lid 20 is positioned as shown in Fig. 2, ball valve 18 is closed with ball 24 plugging filler 9 in known fluidtight manner, thus preventing fuel or vapours from issuing from the same. At the same time, lid 20 is secured, by reversible drive means 21, against edge 32 and flush with body 2, so as to aerodynamically shield and conceal box 4 and valve 18 housed inside the same. Filler 9 is opened for refuelling by simply operating connecting rod 27 (e.g. by means of motor 28) so as to turn control member 19 in the direction of the arrow (Fig. 2) from the Fig.2 to the Fig.3 position, wherein it is arrested by projection 28 on the opposite side to end 31 of body 10 contacting the limit stop defined by tab 29. As it turns, control member 19 opens valve 18 by turning ball 24, which presents a transverse hole 50 which, when positioned in line with filler 9, provides for opening the same. At the same time, rotation of ball 24 is also transmitted by means 21 to lid 20. That is, connecting rod 38 turns lever 36 about pin 43, thus turning curved arm 31 through an arc of a circle having pin 43 as its center, to bring lid 20 into the Fig.3 position, wherein box 4 is uncovered and filler 9 accessible for refuelling. After refuelling, connecting rod 27 is simply operated in reverse for simultaneously closing valve 18 and lid 20, as determined by the other projection 28 contacting limit stop 29. The advantages of the present invention will be clear from the foregoing description. In particular, it provides for a fuel filler device of straightforward design, attractive appearance, excellent streamlining characteristics, and which is fully controllable from inside the vehicle. Moreover, if the latter characteristic is not required, the ball valve feature, together with all the advantages associated with the same, may be employed equally as well on standard cap type fillers, by virtue of the reversible nature of drive means 21, which provide for also opening valve 18 when lid 20 is opened normally from outside the vehicle.

To those skilled in the art it will be clear that changes may be made to the embodiment described and illustrated herein without, however, departing from the scope of the present invention. For example, body 10 may be dispensed with and replaced by a ring nut for securing filler 9; lid 20 and bracket 37 being supported directly on the vehicle body.

## Claims

1. A vehicle fuel filler device (1) comprising a filler (9) able to be secured by means of its inlet end (8) to the vehicle body in correspondence with a fuel filler box (4) formed inside the vehicle body (2); an on-off ball valve (18) housed inside said inlet end (8) of said filler (9); and a ball valve control member (23) projecting externally from said filler (9), characterised by the fact that the fuel filler device (1) also comprises a pivotable lid (20) designed to assume a first closed position wherein it closes said fuel filler box (4) substantially flush with the outer surface (3) of the vehicle body (2), and a second open position wherein it projects transversely in relation to said outer surface (3) of the vehicle body (2), thus opening said filler box (4); supporting means (10) for the pivotable lid (20); and reversible actuating means (35, 38, 39) connecting the lid (20) to the ball valve control member (23) for either setting the lid (20) in said first position when the ball valve (18) is closed or for setting the lid (20) in said second position when the ball valve (18) is open.

2. A device as claimed in Claim 1, characterised by the fact that said member controlling said ball valve comprises a rotary pin (23) secured angularly integral with the plug of said ball valve ( 18); and a rocking lever (25) having an intermediate portion secured angularly integral with said rotary pin (23); said rocking lever pivoting at a first end on said reversible actuating means (35, 38, 39) and, at a second end opposite the first, on a movable drive element (7) controllable manually and/or via motor means

3. A device as claimed in Claim 2, characterised by the fact that said rotary pin (23) presents a pair of outer radial projections (28) designed to cooperate with a stop rib (29) projecting outwards of said filler (9), parallel to and in the vicinity of said pin (23).

4. A device as claimed in any one of the foregoing Claims, characterised by the fact that said means for supporting said rotary lid comprise a cup-shaped body (10) designed to snap on to said inlet end (8) of said filler (9), and housed inside said fuel filler box (4) on said vehicle body (2); said lid (20) pivoting in idle and projecting manner, along one end edge (30), on a corresponding end (31) of said cup-shaped body (10).

5. A device as claimed in Claim 4, characterised by the fact that said fuel filler box (4) inside said vehicle body (2) is tank-shaped, and presents and end wall (5) having an opening (6) and gripped between said inlet end (8) of said filler, which presents an outer radial flange (14) surrounding said opening, and said cup-shaped body (10), which is housed invisibly inside said fuel filler box (4) and cooperates, via an outer annular rim (11), with a locating tab (12) formed inside said fuel filler box (4).

6. A device as claimed in any one of the foregoing Claims, characterised by the fact that said reversible actuating means comprise a fixed fork-shaped bracket (37); an elbow lever (36) comprising a curved arm (35) and a straight arm (41) connected to said curved arm via an elbow fitting (40), said lever pivoting in projecting manner on said fixed bracket (37) at a first end forming part of said straight arm (41), and being secured angularly integral with said lid (20) at a second end forming part of said curved arm (35); and a connecting rod (32) pivoting at one end on said control member and, at the opposite end, on said elbow fitting (40).

7. A device as claimed in Claim 6, characterised by the fact that said curved arm (35) of said lever (36) extends over an arc of substantially 180° having said first end of said lever as its center.

8. A device as claimed in Claim 6 or 7, characterised by the fact that said lid (20) is supported in rigidly projecting manner on said curved arm (35) of said lever (36), and pivots on said fork-shaped bracket (37) via said lever (36) itself; said fork-shaped bracket (37) being integral with said vehicle body (2).

9. A device as claimed in Claim 8, characterised by the fact that said fork-shaped bracket (37) is formed integral with and projecting laterally from a cup-shaped body (10) housed inside said fuel filler box (4) inside said vehicle body (2), and connectable to said filler (9).

**Patentansprüche**

1. Betankungsvorrichtung (1) für ein Fahrzeug mit einem Tankstutzen (9), der durch sein Einlaßende (8) an der Karosserie (2) befestigt werden kann, in Zusammenwirken mit einem Betankungskasten (4), der innerhalb der Karosserie (2) ausgebildet ist; einem Ein-Aus-Kugelventil (18), das in Inneren des Einlaßendes (8) des Tankstutzens (9) angeordnet ist; und mit einer Kugelventil-Steuervorrichtung (23), die vom Tankstutzen (9) nach auß vorsteht, dadurch gekennzeichnet, daß die Betankungsvorrichtung (1) eine schwenkbare Klappe (20), die so konstruiert ist, daß sie eine erste, geschlossene Position, in der sie den Betankungskasten (4) im wesentlichen flächenbündig mit der Außenfläche (3) der Karosserie (2) abschließt, und eine zweite, offene Position ennehmen kann, in der sie quer zur Außenfläche (3) der Karosserie (2) steht, wodurch der Betankungskasten (4) geöffnet wird; Halterungsmittel (10) für die schwenkbare Klappe (20); und umkehrbare Betätigungsmittel (35, 38, 39) aufweist, die die Klappe (20) mit der Kugelventil-Steuervorrichtung (23) verbinden, um die Klappe (20) in die erste Position zu bringen, wenn das Kugelventil (18) geschlossen ist, oder um die Klappe (20) in die zweite Position zu bringen, wenn das Kugelventil (18) geöffnet ist.

2. Vorrichtung nach Anspruch 1, dadurch gekennzeichnet, daß die Vorrichtung, die das Kugelventil (18) steuert, einen Drehzapfen (23), der winkelig einstückig an dem Küken des Kugelventils (18) befestig ist, und einen Schwenkhebel (25) (rocking lever) aufweist, der einen Mittelabschnitt hat, der winklig einstückig an dem Drehzapfen (23) befestig ist; wobei der Schwenkhebel (25) mit einem ersten Ende an die umkehrbaren Betätigungsmittel (35, 38, 39) und mit einem zweiten, dem ersten Ende entgegengesetzten Ende an ein bewegbares Betätigungselement (27) angelenkt ist, das manuell und/oder durch Motormittel steuerbar ist.

3. Vorrichtung nach Anspruch 2, dadurch gekennzeichnet, daß der Drehzapfen (23) ein Paar äußere radiale Mitnehmer (28) aufweist, die so ausgeführt sind, daß sie mit Stop-Nocken (29), die außerhalb des Tankstutzens (9) und parallel zu und in unmittelbarer Nähe des Drehzapfens (23) auskragen, zusammenwirken.

4. Vorrichtung nach einem der vorangehenden Ansprüche, dadurch gekennzeichnet, daß die Halterungsmittel (10) der schwenkbaren Klappe (20) einen schalenförmigen Körper (10) aufweisen, de zum Aufrasten auf das Einlaßende (8) des Tankstutzens (9) konstruiert ist, und der im Inneren des Betankungskastens (4) des Karosserie (2) angeordnet ist, wobei die Klappe (20) freilaufend und überkragend entlang einer Endkante (30) um ein korrespondierendes Ende des schalenförmigen Körpers gedreht wird.

5. Vorrichtung nach Anspruch 4, dadurch gekennzeichnet, daß der Betankungskasten (4) im Inneren der Karosserie (2) tankförmig ist, ein Endwand (5) mit einer Öffnung (6) aufweist und zwischen dem Einlaßende (8) des Tankstutzens (9), das einen äußeren, radialen Flansch (14), der die Öffnung (6) umgibt, aufweist und dem schalenförmigen Körper (10) eingespannt ist, der unsichtbar im Inneren des Betankungskastens (4) angeordnet ist, und der über einen äußeren ringförmigen Rand (11) mit einem Sperrstift (12), der im Inneren des Betankungskastens (4) angeordnet ist, zusammenwirkt.

6. Vorrichtung nach einem der vorangehenden Ansprüche, dadurch gekennzeichnet, daß die umkehrbaren Betätigungsmittel eine gesicherte, gabelförmige Klammer (37), einen gewinkelten Hebel (36), der einen gebogenen Arm (35) und einen geraden Arm (41), der über ein gebogenes Anschlußstück (40) mit dem gebogenen Arm (35) verbunden ist, aufweist, wobei der Hebel (36) um die gesicherte Klammer (37) herum an einem ersten Ende, das Bestandteil des geraden Arms (41) ist, herausgedreht wird, und wobei der Hebel (36) winklig einstückig über ein zweites Ende, das Bestandteil des gebogenen Arms (35) ist, an der Klappe (20) gesichert ist; und einen Verbindungsstift (32) aufweisen, der an einem Ende um die Steuervorrichtung und am gegenüberliegenden Ende um das gebogene Anschlußstück (40) drehbar ist.

7. Vorrichtung nach Anspruch 6, dadurch gekennzeichnet, daß der gebogene Arm (35) des Hebels (36) sich über einen Bogen von im wesentlichen 180 Grad, mit dem ersten Ende des Hebels (36) als Mittelpunkt, erstreckt.

8. Vorrichtung nach Anspruch 6 oder 7, dadurch gekennzeichnet, daß die Klappe (20) durch den gebogenen Arm (35) des Hebels (36) in starr heraussstehender Stellung gehalten und um die gabelförmige Klammer (37) durch den Hebel (36) selbst gedreht wird, wobei die gabelförmige Klammer (37) einstückig mit der Karosserie (2) ausgeführt ist.

9. Vorrichtung nach Anspruch 8, dadurch gekennzeichnet, daß die gabelförmige Klammer (37) einstückig an den schalenförmigen Körper (10), der im Inneren des Betankungskastens (4) im Inneren der Karosserie (2) angeordnet ist, angeformt ist, und seitlich daraus vorragt, und daß sie mit dem Tankstutzen (9) verbindbar ist.

## Revendications

1. Dispositif de remplissage d'essence (1) pour véhicule, comprenant un conduit de remplissage (9) susceptible d'être fixé au moyen de son extrémité d'entrée (8) sur la carrosserie du véhicule en correspondance avec un caisson de plein d'essence (4) formé à l'intérieur de la carrosserie du véhicule (2), une vanne à boisseau sphérique par tout ou rien (18) logée à l'intérieur de l'extrémité d'entrée (8) du conduit de remplissage (9), et un élément de commande (23) de la vanne à boisseau sphérique se projetant à l'extérieur de ce conduit de remplissage (9), caractérisé par le fait que le dispositif de remplissage d'essence (1) comprend également un couvercle pivotant (20) conçu pour prendre une première position fermée dans laquelle il ferme le caisson de plein d'essence (4) en affleurant pratiquement la surface extérieure (3) de la carrosserie (2) du véhicule, et une deuxième position ouverte dans laquelle il se projette transversalement par rapport à cette surface extérieure (3) de la carrosserie (2) du véhicule, ouvrant ainsi le caisson de plein (4), des moyens supports (10) pour le couvercle pivotant (20), et des moyens d'actionnement réversibles (35,38,39) reliant le couvercle (20) à l'élément de commande (23) de la vanne à boisseau sphérique pour, soit positionner le couvercle (20) dans la première position dans laquelle la vanne à boisseau sphérique (18) est fermée, soit pour positionner le couvercle (20) dans la deuxième position dans laquelle la vanne à boisseau sphérique (18) est ouverte.

2. Dispositif selon la revendication 1, caractérisé par le fait que l'élément commandant la vanne à boisseau sphérique comprend une broche rotative (23) solidaire en rotation du boisseau de la vanne à boisseau sphérique (18), et un levier basculant (25) ayant une portion intermédiaire solidaire en rotation de la broche tournante (23), ce levier basculant pivotant au niveau d'une première extrémité sur les moyens d'actionnement réversibles (35,38,39) et, au niveau d'une deuxième extrémité opposée à la première, sur un élément d'entraînement mobile (27) pouvant être commandé manuellement et/ou par l'intermédiaire d'un moteur.

3. Dispositif selon la revendication 2, caractérisé par le fait que la broche tournante (23) présente deux saillies radiales extérieures (28) conçues pour coopérer avec une nervure de butée (29) se projetant à l'extérieur du conduit de remplissage (9), parallèlement à la broche (23) et au voisinage de celle-ci.

4. Dispositif selon l'une quelconque des revendications précédentes, caractérisé par le fait que les moyens supportant le couvercle pivotant comprennent un corps en forme de coupe (10) conçu pour s'enclencher sur l'extrémité d'entrée (8) du conduit de remplissage (9) et logé à l'intérieur du caisson de plein d'essence (4) sur la carrosserie du véhicule (2), ce couvercle (20) pivotant de manière à prendre une position fermée et une position ouverte le long d'un bord terminal (30), sur une extrémité correspondante (31) du corps en forme de coupe (10).

5. Dispositif selon la revendication 4, caractérisé par le fait que le caisson de plein d'essence (4) à l'intérieur de la carrosserie (2) du véhicule est en forme de réservoir, et présente une paroi terminale (5) ayant une ouverture (6) et bridée entre l'extrémité d'entrée (8) du conduit de remplissage, qui présente une collerette radiale extérieure (14) entourant cette ouverture, et le corps en forme de coupe (10), qui est logé de façon invisible à l'intérieur du caisson de plein d'essence (4), et coopère, par l'intermédiaire d'un bord annulaire extérieur (11) avec une languette de positionnement (12) formée à l'intérieur du caisson de plein d'essence (4).

6. Dispositif selon l'une quelconque des revendications précédentes, caractérisé par le fait que les moyens d'actionnement réversibles comprennent une chape fixe (37), un levier coudé (36) comprenant un bras incurvé (35) et un bras rectiligne (41) solidaire du bras incurvé par l'intermédiaire d'un coude (40), ce levier pivotant de façon à s'en projeter sur la chape fixe (37) au niveau d'une première extrémité faisant partie du bras rectiligne (41) et étant solidaire en rotation du couvercle (20) au niveau d'une deuxième extrémité faisant partie du bras incurvé (35), et une tige de liaison (32) articulée au niveau d'une extrémité sur l'élément de commande et, au niveau de l'extrémité opposée, sur le coude (40).

7. Dispositif selon la revendication 6, caractérisé par le fait que le bras incurvé (35) du levier (36) s'étend sur un arc d'environ 180° ayant pour centre la première extrémité du levier.

8. Dispositif selon la revendication 6 ou la revendication 7, caractérisé par le fait que le couvercle (20) est supporté de manière solidaire et en s'en projetant sur le bras incurvé (35) du levier (36), et pivote sur la chape (37) par l'intermédiaire du levier (36) lui-même, la chape (37) étant solidaire de la carrosserie (2) du véhicule.

9. Dispositif selon la revendication 8, caractérisé par le fait que la chape (37) est d'un seul tenant avec le corps en forme de coupe (10) logé à l'intérieur du caisson de plein d'essence (4) à l'intérieur de la carrosserie (2) du véhicule et s'en projette latéralement, et qu'elle peut être raccordée au conduit de remplissage (9).

Fig.1
1
9
50
24
29
25
18
8
19
23
28
14
6
5
39
38
21
11
12
32
2
4
10
37
20
43
36
42
3

1
33
9
27
29
25
27
18
28
8
26
19
6
35
21
38
14
5
31
39
23
28
11
32
40
2
42
37
36
44
3
41
43
12
4
30
45
20
10

Fig.2

1
9
27
29
23
28
18
8
25
26
19
28
6
14
5
10
4
21
42
40
36
41
39
31
44
43
37
30
38
32
11
3
2
35
45
20

Fig.3